# EUROPEAN PATENT APPLICATION

(11) **EP 4 840 628 A1**
(43) Date of publication of application: **18.11.2026**
(21) Application number: 26152478.9
(22) Date of filing: 16.01.2026
(51) Int. Cl.: B32B 9/04, B32B 7/12, B32B 9/02, B32B 27/30, B32B 27/32, B32B 27/36, B32B 27/40

(54) **BARRIER PACKING MATERIAL, METHODS, AND USES THEREOF**

(30) Priority: 16.05.2025 PT 2025120266
(71) Applicant: Sedacor - Sociedade Exportadora De Artigos de Cortica, Lda., 4535-489 S. Paio de Oleiros (PT)
(72) Inventor: MENDES PINTO DE SÁ, CARLOS ALBERTO, 4535-489 S. PAIO DE OLEIROS (PT); REGADAS PINTO DE SÁ, VERA LÚCIA, 4535-489 S. PAIO DE OLEIROS (PT)
(74) Representative: Patentree

(57) **Abstract**

The present disclosure relates to a laminated barrier film for packing, comprising a filler consisting of cork granules and a binder. A method for producing said laminated barrier film and its use as a barrier for oxygen and/or moisture ingress are also disclosed. The said laminated barrier film has applications in the packing of beverages and foodstuffs for preservation; preferably as an additional packing component. The present disclosure may also be applied in the packing of cosmetics and/or pharmaceutical-grade packing.

## Description

### TECHNICAL FIELD

The present disclosure relates to a packing material, namely a material with barrier properties against oxygen and moisture ingress to be applied in several industries, namely foodstuffs as beverages, cosmetics, and the pharmaceutical industry.

### BACKGROUND

In sectors like foodstuffs, cosmetic, or pharmaceutical packaging, where even small amounts of exposure to oxygen, moisture, reactive chemicals, or environmental contaminants can reduce quality, speed up spoiling, cause functional degradation, or jeopardize safety. Thus, maintaining product integrity is crucial. Failing to maintain product integrity can lead to monetary loss, non-compliance with regulations, or, in extreme situations, serious health risks.

Ensuring long-term protection against oxidation, moisture ingress, and chemical interactions presents a significant challenge in sensitive products such as beverages, foodstuffs, cosmetics, and pharmaceuticals, which are inherently vulnerable to degradation. These industries face a critical demand for advanced packaging materials capable of extending shelf life, preserving sterility (particularly in medical and pharmaceutical applications), and providing robust defence against environmental stressors such as oxygen, moisture, temperature fluctuations, or airborne contaminants. In addition, in demanding storage and distribution environments, packaging solutions must preserve product efficacy and safety.

Traditional packaging and barrier materials often fail to provide a reliable, pinhole-free barrier while maintaining flexibility and compatibility with manufacturing processes.

Document US4547433A discloses a heat-shrinkable laminate film having gas-barrier properties as well as oil resistance properties having application in packaging. This film comprises a core layer of vinylidene chloride copolymer or ethylene-vinyl alcohol copolymer, adhesive layers than bond two outer layers bond to the core: the first outer layer consists of an ethylene-alpha olefin copolymer or a blend containing a major proportion of ethylene-vinyl acetate copolymer, while the second outer layer, of analogous composition, is cross-linked via ionizing radiation to enhance durability and resistance to oils, making it suitable for demanding packaging applications.

Document US4778715A discloses a barrier layer film with improved adhesion between layers comprising a layer of vinylidene chloride copolymer adhered to a layer comprising a blend of ethylene-butyl acrylate copolymer with linear ethylene-alpha olefin copolymer.

Document US4681797A discloses a thermoformable multi-layer plastic sheet with gas barrier properties for the packaging of vapor-sensitive products made up of an inner gas barrier layer, such as vinylidene chloride-vinyl chloride copolymer faced on both sides with a glue layer applied to either side of the gas barrier layer and layers of a polyolefin composition bonded to the glue layers. To increase the tensile strength of the sheet during heating for the purpose of thermoforming, a second polyolefin layer is bonded to at least one of the two polyolefin layers, the second polyolefin layer having a lower melt index than the layer of the polyolefin composition beneath it.

Document US5356583A that has as an applicant the "The Dow Chemical Company" discloses a coextruded film comprising four or five layers with both gas barrier and fire-retardant properties produced by melt coextrusion useful in making laminates. The multilayer film comprises low density polyethylene, ethylene/vinyl acetate copolymer, Saran resin, chlorinated polyethylene (CPE), polyhalogenated organic/antimony oxide as fire retardant and a small amount of a slip agent.

SARANEX^{™}, manufactured by The Dow Chemical Company, is a multilayer coextruded film of specific polymer materials, namely low-density polyethylene (LDPE), ethylene-vinyl acetate (EVA), and polyvinylidene chloride (PVDC) in a five-layer structure (LDPE/EVA/PVDC/EVA/LDPE). SARANEX^{™} is engineered to provide exceptional barrier properties against oxygen, water vapor, odours, and chemical agents. Its formable and has a pinhole-free nature, which makes it ideal for protecting sensitive products like foodstuffs, pharmaceuticals, and medical devices.

Nevertheless, barrier films in the prior art, including SARANEX^{™}, are made of plastic and while its multilayer structure delivers unmatched functionality, the combination of diverse plastics (LDPE, EVA, PVDC) makes it difficult to recycle through conventional methods, which constitutes an environmental challenge. Ultimately, barrier films waste goes to landfills or ecosystems, where it degrades into microplastics, one of the biggest environmental problems in 2025.

Therefore, there is an urgent need for sustainable alternatives to conventional packaging materials with the same or improved barrier properties of existing solutions. Furthermore, the multilayer structure is often a common feature in barrier films, however, as described, the inadequate interlayer adhesion is often a critical challenge. These limitations underscore the need for innovative, eco-friendly barrier films that maintain functionality while addressing adhesion and sustainability concerns.

These facts are disclosed in order to illustrate the technical problem addressed by the present disclosure.

### GENERAL DESCRIPTION

The present disclosure provides a laminated barrier film for use in packaging applications. The laminated barrier film comprises a bilayer or multilayer structure configured to provide enhanced barrier properties, including resistance to gas and moisture transmission, while maintaining suitable mechanical flexibility and integrity for sealing applications. The laminated barrier film is particularly suitable for incorporation into closure systems, including but not limited to screw caps and bottle stoppers, where it functions as a sealing or lining element to ensure leak prevention, product preservation, and extended shelf life. The disclosed laminated barrier film may be adapted to various container types and contents and is compatible with conventional manufacturing and packaging processes, including those used in food, cosmetic, and pharmaceutical applications.

The laminated barrier film of the present disclosure is a flexible material without pinholes that confers protection against oxygen, moisture ingress, chemical or airborne contaminants to products contained in packages.

The present disclosure has a wide range of applications in packaging. It can be used in foodstuffs in beverage packages, capsules, bottles, or cream jars.

The laminated barrier film of the present disclosure is recyclable mechanically and/or chemically, enabling circularity.

In an embodiment for better results, the laminated barrier film of the present disclosure is recyclable mechanically by grinding the film waste into small particles, which can then be reprocessed into new cork materials.

In an embodiment for better results, the laminated barrier film of the present disclosure is recyclable chemically by breaking down into its chemical components, which can be reused to produce new cork materials.

A laminated barrier film (or disc) for packing, comprising:
at least a first and a second layer bounded to each other by lamination;
wherein the first layer is a polymeric membrane coating;
wherein the second layer comprises;
   a filler consisting of cork granules having a particle size ranging from 0.2 mm to 7 mm; and
   a binder, wherein the amount of binder ranges from 8% to 45% (wbinder/wcork) and the binder is selected from the group consisting of: polyurethane, latex, melamine from fossil or vegetal origin, thermoplastic hot-melt, or mixtures thereof;
or wherein the second layer is natural cork bounded to the first layer by a hot melt adhesive; and
wherein the laminated barrier film mass density ranges from 100 to 500 kg/m³.

The term "granulometry" as used herein refers to the particle size distribution of the cork granules, expressed as the characteristic particle diameter determined by sieve analysis according to ISO 2030:2018 or an equivalent standard. Unless otherwise specified, the range refers to the size of the smallest sieve aperture through which at least 90% of the particles pass.

The term "binder" as used herein refers to a polymeric material capable of wetting, enveloping, and mechanically bonding the cork granules upon curing, melting, or reactive cross-linking. The binder may be thermoplastic or thermosetting.

The term "natural cork" is a sheet derived from natural cork, exhibiting the characteristic closed-cell structure of cork and formed without any mechanical or chemical processing or modification. The native properties of cork are preserved, including elasticity and barrier behavior, while being dimensioned to be suitable for lamination.

Laminated barrier film means a film comprising at least one structural layer formed from bonded cork granules and binder, optionally in combination with one or more additional layers such as membrane coatings, consolidated by rolling, calendering, pressing, or other lamination techniques.

The term "polymeric membrane coating" as used herein refers to a continuous polymeric layer applied to one or both surfaces of the laminated barrier film to improve barrier properties, mechanical strength, or surface integrity. Its thickness typically lies between 20 µm and 300 µm.

In an embodiment for better results, the laminated barrier film may be a bilayer.

In an embodiment for better results, the laminated barrier film may be a multilayer. Preferably, the laminated barrier film has from two to seven layers; more preferably three to seven layers.

In an embodiment for better results, the layers of the laminated barrier film of the present disclosure may be joined by lamination, with or without the use of an adhesive.

In an embodiment for better results, each cork granule may comprise a granulometry that ranges from 0.5 mm to 1 mm.

In an embodiment for better results, the amount of binder may range from 25% to 39% (W_{binder}/W_{cork}).

In an embodiment for better results, the mass density may range from 200 to 400 Kg/m³; preferably 250 to 350 Kg/m³.

The term "mass density" as used herein refers to the apparent density of the film, measured according to ISO 7322:2014 as mass divided by external volume.

In an embodiment for better results, the thickness of the laminated barrier film ranges from 0.1 to 12 mm; preferably 1 to 10 mm; more preferably 1 to 5 mm.

In an embodiment for better results, the thickness of first layer (polymeric membrane coating) ranges from 20 to 300 microns; preferably 40 to 180 microns; more preferably 40 to 80 microns.

In an embodiment for better results, the thickness of the second layer ranges from 0.1 to 11 mm; preferably 0.5 to 8 mm; more preferably 1 to 5 mm.

In an embodiment for better results, the width of the film ranges from 20 mm to 2500 mm; preferably 1000 mm to 2000 mm; more preferably 100 mm to 500 mm.

In an embodiment for better results, the polymer of the first layer may be selected from a list consisting of: polyurethane (TPU), polyethylene (PE), polypropylene (PP), polyethylene terephthalate (PET), ethylene-vinyl alcohol copolymer (EVOH), polyvinylidene chloride (or dichloride) (PVDC), thermoplastic copolyester (TPC), or mixtures thereof.

In an embodiment for better results, the laminated barrier film may be subjected to a surface treatment.

In an embodiment for better results, the film may be provided in the form of a roll, sheet, or disc.

In an embodiment for better results, the hardness may range from 60 to 80 shore A; preferably 65 to 75 shore A measured by ISO 7322:2014.

In an embodiment for better results, the oxygen permeability/transmission rate may range from 0.1 to 1 cm³/m²/day measured by ASTM F1927-20 (2020). Barrier means resistance to permeation of oxygen and/or water vapour, quantified via oxygen transmission rate (OTR) or water vapour transmission rate (WVTR) measured according to ASTM F1927-20 (2020) or equivalent standards.

Oxygen transmission rate (OTR) denotes the mass flow of oxygen through the film, expressed per unit area or, when appropriate for packaging components, as the total oxygen permeation per year.

In another embodiment for better results, the oxygen permeability/transmission rate may range from 0.5-2 mgO²/year measured by luminescence.

In an embodiment for better results, the cork granulates may be derived from recycled cork.

In an embodiment for better results, the film may be configured to contact a protruding edge (lip or rim) of a packing. Configured to contact a protruding edge means that the film is dimensioned or shaped so that at least one surface can be positioned directly against a corner or edge of a packaging structure to provide protection or sealing.

In an embodiment for better results, the film may have compatibility with automated packaging systems. Compatibility with automated packaging systems refers to the ability of the film to be processed, cut, transported, or handled by automated packaging machinery without tearing, jamming, or requiring manual intervention.

Another aspect of the present disclosure relates to a method for producing the laminated barrier film of the present disclosure, comprising the steps:
providing the first and the second layer;
joining the first layer and the second layer to form a laminate in the form of a continuous sheet or roll by rolling, calendering, laminating, or extruding; and
sanding the continuous sheet or roll to obtain the laminated barrier film.

Another aspect of the present disclosure relates to a method for producing the laminated barrier film of the present disclosure, comprising the steps:
providing the polymeric membrane coating, the cork granules as filler and the binder;
bonding/agglutinating the granules and the binder under a controlled pressure and temperature that ranges from 80 °C to 150 °C in the oven for at least 1 hour;
forming the composite into a continuous sheet or roll by rolling, calendering, laminating, or extruding sanding the sheet or roll to obtain the film.

In an embodiment, the continuous roll/sheet of the film may be cut into different shapes using drilling, cutting tools, laser, saw, computer numerical control (CNC), among others.

In an embodiment for better results, the method for producing the laminated barrier film of the present disclosure may further comprise the coating of the laminated barrier film with a membrane coating by spray coating, dip coating, hot pressing, contact pressing, or vacuum pressing.

In an embodiment for better results, the film of the present disclosure may be subjected to a surface treatment, such as plasma treatment or corona treatment to modify the surface properties.

In an embodiment for better results, the first layer of film of the present disclosure may be subjected to a surface treatment, such as plasma treatment or corona treatment to modify the surface properties.

In an embodiment for better results, the second layer of film of the present disclosure may be subjected to a surface treatment, such as plasma treatment or corona treatment to modify the surface properties.

In an embodiment for better results, the method for producing the laminated barrier film of the present disclosure may be applied on a calender at a temperature that ranges from 60 °C to 450 °C, a pressure of 1-16 bar and a speed of between 2 m/min to 25 m/min for obtaining the film.

Even another aspect of the present disclosure relates to the use of the laminated barrier film of the present disclosure as a barrier for oxygen and/or moisture ingress.

In an embodiment for better results, the laminated barrier film may be used in packing; preferably as an additional packing component since it is a supplementary layer enhancing the sealing surface of the container opening of a package and reduce the passage of oxygen, moisture and contaminants, such as chemicals or airborne microorganisms.

In an embodiment for better results, the laminated barrier film of the present disclosure provides an effective barrier that inhibits the formation and proliferation of microorganisms in alcoholic and non-alcoholic beverages.

In an embodiment for better results, the laminated barrier film may be used in the packing of beverages and foodstuffs for preservation.

In an embodiment for better results, the laminated barrier film may be used in the packing of cosmetics (such as, creams or parfums).

In an embodiment for better results, the laminated barrier film may be used in pharmaceutical-grade packing.

Another aspect of the present disclosure relates to a screw cap or a stopper comprising the laminated barrier film disclosed herein, wherein the laminated barrier film is bounded to the screw cap or the stopper; preferably the stopper is a cork stopper.

In an embodiment for better results, the laminated barrier film is bonded to only one surface of the screw cap or the stopper; or wherein the laminated barrier film is bonded to two opposite surfaces of the screw cap or the stopper; preferably the stopper is a cork stopper.

### BRIEF DESCRIPTION OF THE DRAWINGS

The following figures provide preferred embodiments for illustrating the disclosure and should not be seen as limiting the scope of invention.
**Figure 1**. Schematic representation of several embodiments of the laminated film of the present disclosure.
**Figure 2****:** Schematic representation of an embodiment of the method to produce the laminated barrier film of the present disclosure.
**Figure 3**: Schematic representation of an embodiment of the method to produce the laminated barrier film of the present disclosure using a thermoplastic hot melt as a binder.

### DETAILED DESCRIPTION

The present disclosure relates to a laminated barrier film for packing, comprising a filler consisting of cork granules and a binder. A method for producing said laminated barrier film and its use as a barrier for oxygen and/or moisture ingress are also disclosed. The said laminated barrier film has applications in the packing of beverages and foodstuffs for preservation; preferably as an additional packing component. The present disclosure may also be applied in the packing of cosmetics and/or pharmaceutical-grade packing.

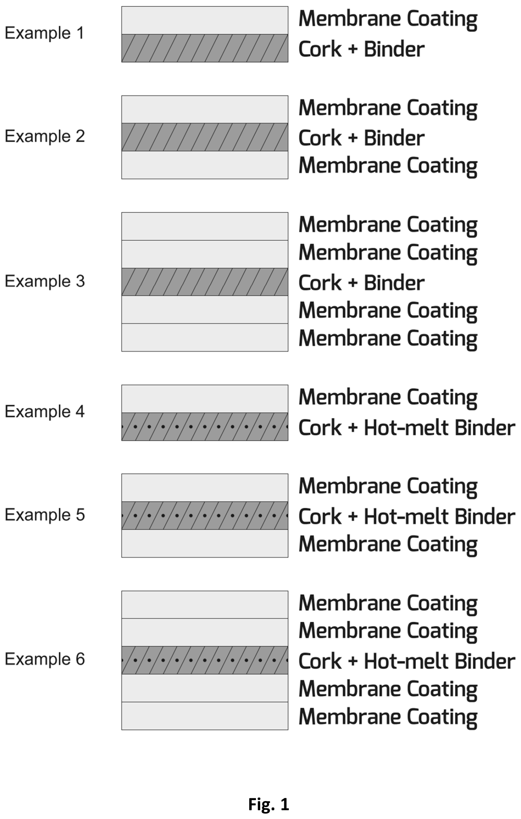

**Fig. 1** schematically illustrates several non-limiting embodiments of the laminated barrier film of the present disclosure, differing in the number and configuration of membrane coating layers and in the type of binder used in the cork-based core layer. Examples include one membrane coating on one side; one membrane coating on both sides; two membrane coatings on one or both sides; analogous configurations using a hot-melt binder.

In an embodiment for better results, the laminated barrier film may comprise a filler consisting of disinfected or sterilized cork granules, a binder, and one layer of a membrane coating in one side of the film as in example 1.

In another embodiment for better results, the laminated barrier film may comprise a filler consisting of disinfected or sterilized cork granules, a binder, and one layer of a membrane coating in one side of the film and another layer of a membrane coating in the opposite side of the film as in example 2.

In embodiment for better results, the laminated barrier film may comprise a filler consisting of disinfected or sterilized cork granules, a binder, and two layers of a membrane coating in each side of the film as in example 3.

In another embodiment for better results, the laminated barrier film may comprise a filler consisting of disinfected or sterilized cork granules, a holt-melt binder, one layer of a membrane coating in one side of the film as in example 4.

In another embodiment for better results, the laminated barrier film is a five-layer structure comprising a filler consisting of disinfected or sterilized cork granules, a holt-melt binder, and one layer of a membrane coating in one side of the film and another layer of a membrane coating in the opposite side of the film as in example 5.

In another embodiment for better results, the laminated barrier film is a five-layer structure comprising filler consisting of disinfected or sterilized cork granules, a hot-melt binder, and two layers of a membrane coating in each side of the film as in example 6.

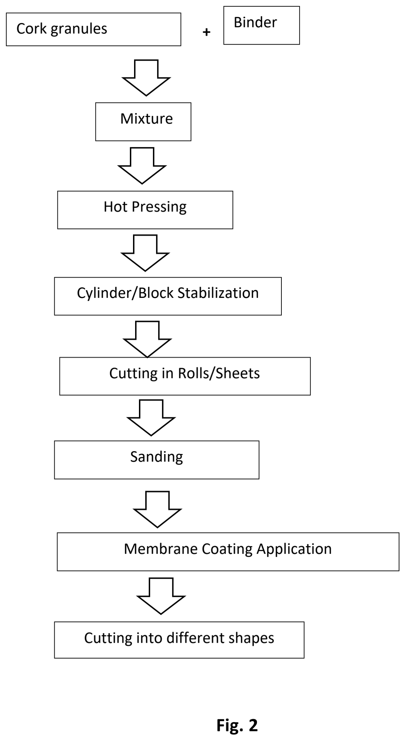

**Fig.2** describes the method of producing said laminated barrier film. The method comprises the agglutination of sterilized/disinfected cork granules with a specific and predetermined particle size and volumetric mass through the joint action of pressure, temperature and a binder. The temperature of the oven where the binder polymerizes is 90 ± 5 °C and the cylinders/blocks are in the oven for at least 1 hour. This produces agglomerated cork cylinders/blocks which, after stabilization, are laminated to the desired thickness through a continuous rolling process of the cylinder/block, obtaining continuous rolls/sheets of agglomerated cork. The rolls/sheets of agglomerated cork are sanded before the membrane coating is applied, using 180 and 240 grit sandpaper. The membrane coating is applied on a calender at a temperature of 175 °C, a pressure of 1 bar and a speed of between 2.5 m/min. The protective film on the film is removed after pressing.

In an embodiment for better results, the rolls/sheets of the laminated barrier film may be then cut into different shapes using drilling, cutting tools, laser, saw, computer numerical control (CNC), among others.

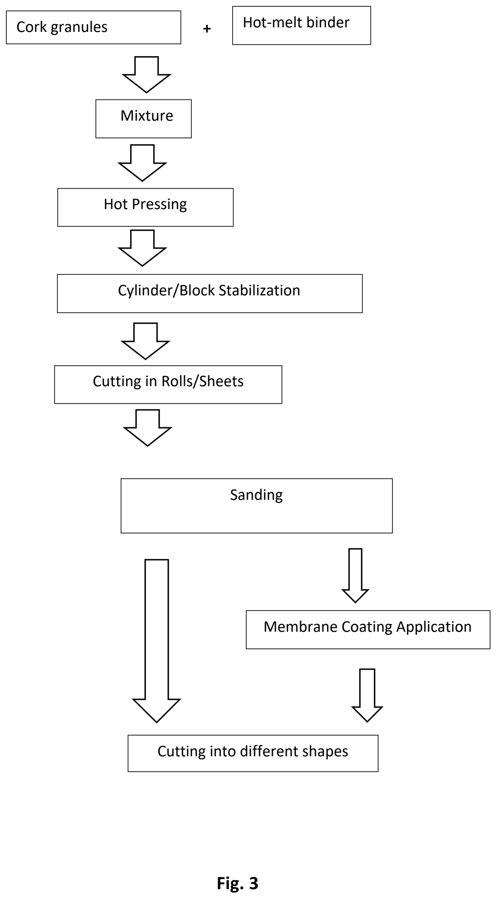

**Fig.3** describes the method of producing said laminated barrier film using as a binder a thermoplastic hot melt. The method comprises the agglutination of sterilized/disinfected cork granules with a specific and predetermined particle size and volumetric mass through the joint action of pressure, temperature and a hot-melt binder. The hot melt binder has a melting range of 105 °C- 115 °C. This produces agglomerated cork cylinders/blocks which, after stabilization, are laminated to the desired thickness through a continuous rolling process of the cylinder/block, obtaining continuous rolls/sheets of agglomerated cork. The rolls/sheets of agglomerated cork are sanded before the membrane coating is applied, using 180 and 240 grit sandpaper.

In an embodiment for better results, the rolls/sheets of the laminated barrier film may be then cut into different shapes using drilling, cutting tools, laser, saw, CNC, among others.

The laminated barrier film of the present disclosure can be recycled mechanically and chemically. The mechanical recycling involves grinding the film waste into small particles, which can then be reprocessed into new cork materials. The chemical recycling breaks down into its chemical components, which can be reused to produce new cork materials.

The term "comprising" whenever used in this document is intended to indicate the presence of stated features, integers, steps, components, but not to preclude the presence or addition of one or more other features, integers, steps, components or groups thereof.

Where ranges are given, endpoints are included. Furthermore, it is to be understood that unless otherwise indicated or otherwise evident from the context and/or the understanding of one of ordinary skill in the art, values that are expressed as ranges can assume any specific value within the stated ranges in different embodiments of the invention, to the tenth of the unit of the lower limit of the range, unless the context clearly dictates otherwise. It is also to be understood that unless otherwise indicated or otherwise evident from the context and/or the understanding of one of ordinary skill in the art, values expressed as ranges can assume any subrange within the given range, wherein the endpoints of the subrange are expressed to the same degree of accuracy as the tenth of the unit of the lower limit of the range.

The disclosure should not be seen in any way restricted to the embodiments described and a person with ordinary skill in the art will foresee many possibilities to modifications thereof. The above-described embodiments are combinable.

The following dependent claims further set out particular embodiments of the disclosure.

## Claims

1. A laminated barrier film for packing, comprising:
at least a first and a second layer bounded to each other by lamination;
wherein the first layer is a polymeric membrane coating;
wherein the second layer comprises;
a filler consisting of cork granules having a particle size ranging from 0.2 mm to 7 mm; and
a binder, wherein the amount of binder ranges from 8% to 45% (W_{binder}/w_{cork}) and the binder is selected from the group consisting of: polyurethane, latex, melamine from fossil or vegetal origin, thermoplastic hot-melt, or mixtures thereof;
or wherein the second layer is natural cork bounded to the first layer by a hot melt adhesive; and
wherein the laminated barrier film mass density ranges from 100 to 500 kg/m³.

2. The laminated barrier film according to the previous claim, wherein the laminated film is a multilayer structure comprising three to seven layers.

3. The laminated barrier film according to any of the previous claim, wherein the cork granules have a particle size ranging from 0.5 mm to 1 mm.

4. The laminated barrier film according to the previous claim, wherein the amount of binder ranges from 25% to 39% (W_{binder}/W_{cork}).

5. The laminated barrier film according to any of the previous claims, wherein the mass density ranges from 200 to 400 Kg/m³; preferably 250 to 350 Kg/m³.

6. The laminated barrier film according to any of the previous claims, wherein the thickness of the laminated barrier film ranges from 0.1 to 12 mm; preferably 1 to 10 mm; more preferably 1 to 5 mm.

7. The laminated barrier film according to any of the previous claims, wherein the thickness of the first layer ranges from 20 to 300 microns; preferably 40 to 180 microns; more preferably 40 to 80 microns.

8. The laminated barrier film according to any of the previous claims, wherein the thickness of the second layer ranges from 0.1 to 11 mm; preferably 0.5 to 8 mm; more preferably 1 to 5 mm.

9. The laminated barrier film according to the previous claim, wherein the polymer of the first layer is selected from a list consisting of: polyurethane, polyethylene, polypropylene, polyethylene terephthalate, ethylene-vinyl alcohol copolymer, polyvinylidene chloride, thermoplastic copolyester, or mixtures thereof.

10. The laminated barrier film according to any of the previous claims, wherein the film is in the form of a roll, sheet, or disc.

11. The laminated barrier film according to any of the previous claims, wherein the hardness ranges from 60 to 80 shore A; preferably 65 to 75 shore A measured by ISO 7322:2014.

12. The laminated barrier film according to any of the previous claims, wherein the oxygen permeability/transmission rate ranges from 0.1 to 1 cm³/m²/day measured by ASTM F1927-20 (2020).

13. A method for producing the laminated barrier film according to the previous claims 1-12, comprising the steps: providing the first and the second layer;
joining the first layer and the second layer to form a laminate in the form of a continuous sheet or roll by rolling, calendering, laminating, or extruding;
sanding the continuous sheet or roll to obtain the laminated barrier film.

14. The laminated barrier film according to the previous claims 1-12 for use in packing; preferably a of beverages, or foodstuffs, or cosmetics, or pharmaceutical-grade packing.

15. A screw cap or a stopper comprising the laminated barrier film according to any of the previous claims 1-12, wherein the laminated barrier film is bounded to the screw cap or the stopper; preferably the stopper is a cork stopper.
